# EUROPEAN PATENT SPECIFICATION

(11) **EP 3 766 736 B1**
(45) Date of publication and mention of the grant of the patent: **18.09.2024**
(21) Application number: 20186070.7
(22) Date of filing: 15.07.2020
(51) Int. Cl.: B60R 3/00, B60R 3/02

(54) **STEPLADDER FOR RESCUE VEHICLES**
TRITTLEITER FÜR RETTUNGSFAHRZEUGE
ESCABEAU POUR VÉHICULES DE SECOURS

(30) Priority: 15.07.2019 IT 201900011769
(43) Date of publication of application: 20.01.2021
(73) Proprietor: IVECO MAGIRUS AG, 89079 Ulm (DE)
(72) Inventor: BRANDSTETTER, Maximilian, 8301 EGGERSDORF BEI GRAZ (AT); GOETZ, Markus, 8042 GRAZ (AT); FAHRNBERGER, Robert, 8063 EGGERSDORF BEI GRAZ (AT)
(74) Representative: Studio Torta S.p.A.

(56) References cited:
- EP-A2- 2 130 979
- EP-B1- 2 130 979
- CA-A- 1 144 583
- US-A- 4 161 997
- US-A1- 2006 011 416
- US-A1- 2007 240 936
- US-A1- 2012 104 721
- US-A1- 2017 246 992

## Description

### TECHNICAL FIELD

The present invention relates to a stepladder, in particular to a stepladder for rescue vehicles, for instance firefighting vehicles.

### BACKGROUND ART

All types of rescue vehicles must provide good accessibility of all parts and components. In particular, such vehicles, for example firefighting vehicles, must be readily accessible on difficult and uncomfortable routes.

Firefighting vehicles usually comprise a stepladder whose step supports are fixed on the vehicle chassis in correspondence to the vehicle cabin. The stepladder is designed to allow the crew/users of the vehicle to get on and off the vehicle easily, as fast and comfortable as possible, in order to act promptly on the fire/on the outstanding emergency.

Aforementioned stepladder is usually fixed to the chassis of the vehicle and have fixed steps on the stepladder framework. Thus, when the firefighting vehicle is on a sloping route even the stepladder and the steps are inclined so that the driver movements for getting on and getting off of the vehicle is more difficult.

Examples of known ladder systems are disclosed in documents EP21320979 A1, CA1 144583 A, US2007/240936 A1, US2006/011416 A1 or US2012/104721 A1. EP21320979 A1 discloses the features according to the preamble of claim 1.

In view of the above, stepladder need to be configured to allow the driver to get on such stepladder when the vehicle is located on inclined routes.

Therefore, the need is felt to provide stepladder for rescue vehicles, which can solve the aforementioned drawbacks.

### DISCLOSURE OF INVENTION

An aim of the present invention is to satisfy the above mentioned needs in a simple and cost-effective way.

The aforementioned aim is reached by a stepladder for a rescue vehicle according to claim 1 and by a method for operating such stepladder on a rescue vehicle according to claim 7.

### BRIEF DESCRIPTION OF THE DRAWINGS

For a better understanding of the present invention, a preferred embodiment is described in the following, by way of a non-limiting example, with reference to the attached drawings wherein:
- Figure 1 is a perspective view of a rescue vehicle comprising a stepladder according to the present invention;
- Figure 2 is a perspective view of the stepladder of the present invention;
- Figure 3 is a perspective view of a portion of the stepladder of figure 2;

- Figure 4A is a back view the of the firefighting vehicle of figure 1 in a first working condition;
- Figure 4B is a back view of the firefighting vehicle o of figure 1 in a second working condition.

### DETAILED DESCRIPTION OF THE INVENTION

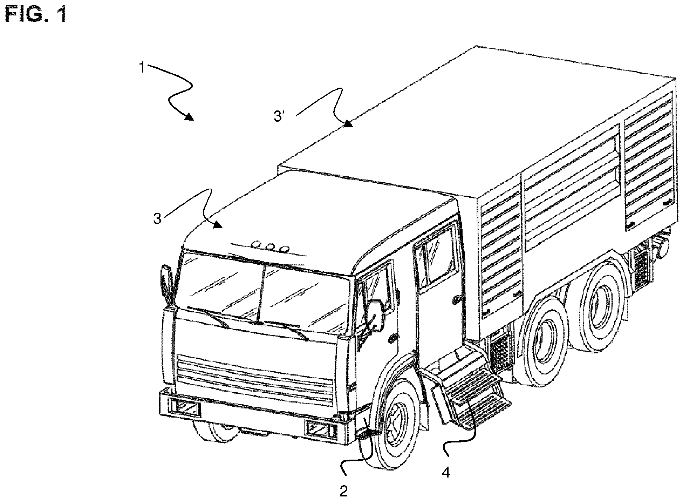

Figure 1 discloses a rescue vehicle 1, in particular a firefighting vehicle 1 essentially comprising a chassis 2, a cabin 3, e.g. comprising a load compartment 3' for driver and passengers, for example firemen. The firefighting vehicle 1 further comprises a stepladder 4, coupled to the cabin 3, configured to facilitate the access of vehicle 1 users from ground to cabin level.

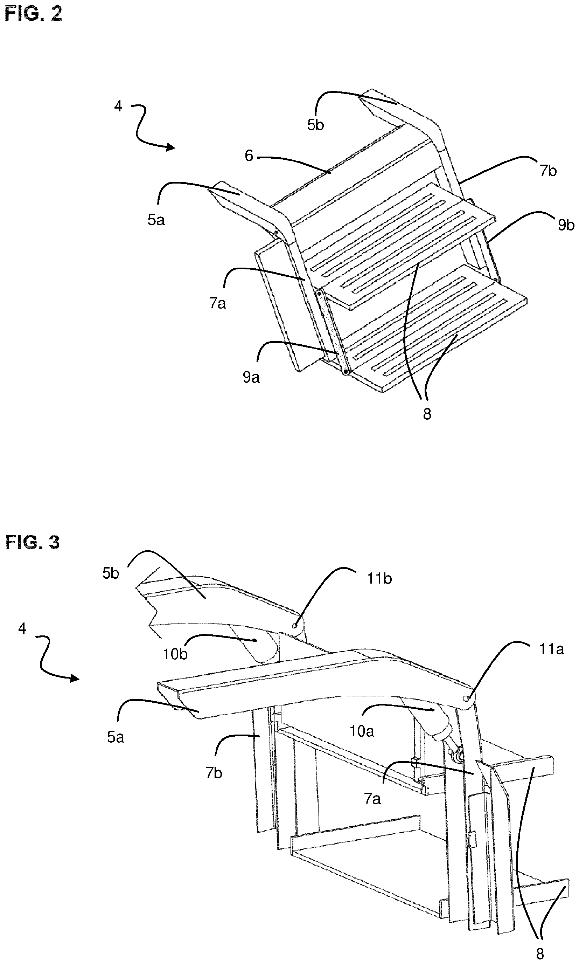

Stepladder 4 comprises, see figures 2 and 3, in the upper part, two forks 5a, 5b configured to be coupled to the cabin 3, e.g. via threaded means or by welding. The two forks 5a, 5b may be joined each other by means of a transversal stiffener 6.

The stepladder 4 may further comprise a first and a second lateral supports 7a, 7b movably connected to first and second forks 5a, 5b. Preferably, first and second lateral supports 7a, 7b are connected to forks 5a, 5b so as to allow a rotation of an upper terminal portion of first and second lateral supports 7a, 7b with respect to these latter. Accordingly, first and second lateral supports 7a, 7b defines respective pivots 11a, 11b with respect to forks 5a, 5b.

The stepladder 4 further comprises at least a step 8 located transversally with respect to lateral supports 7a, 7b and configured to allow the support of vehicle user's feet. In particular, in the present case, the stepladder 4 comprises two steps 8, each step 8 being pivotally connected to the lateral supports 7a, 7b so as to define a first closed position, into which their support plane is substantially parallel to lateral supports and a second, open, position, into which their support plane is substantially perpendicular to lateral supports, allowing users to step on to jump into the cabin. Preferably, steps 8 have a substantially rectangular shape with two lateral ends, a front end and a back end. Said lateral ends may be connected together by means of first and second beam 9a, 9b, so that the movement of a first step 8 is transmitted to the other steps 8.

According to a first aspect of the invention, stepladder 4 further comprises first actuator means 10a, 10b (figure 3) configured to move first and second lateral supports 7a, 7b with respect to forks 5a, 5b. Preferably, such first actuator means 10a, 10b are hinged to first and second fork 5a, 5b and to first and second lateral support 7a, 7b and may comprise cylinders actuators configured to pass from a first, closed, position and to a second, fully extended, position.

Accordingly, the lateral supports 7a, 7b may rotate respectively around the pivot 11a, 11b by means of the action of first actuator means 10a, 10b. Therefore, the lateral supports 7a, 7b may move from a first position when first actuator means 10a, 10b are in their closed position to a second position when the first actuators means are in their open position.

Such actuator means 10a, 10b may be controlled mechanically, e.g. by the movement of an element of the vehicle, e.g. door of the cabin, or electronically as exemplarily described below.

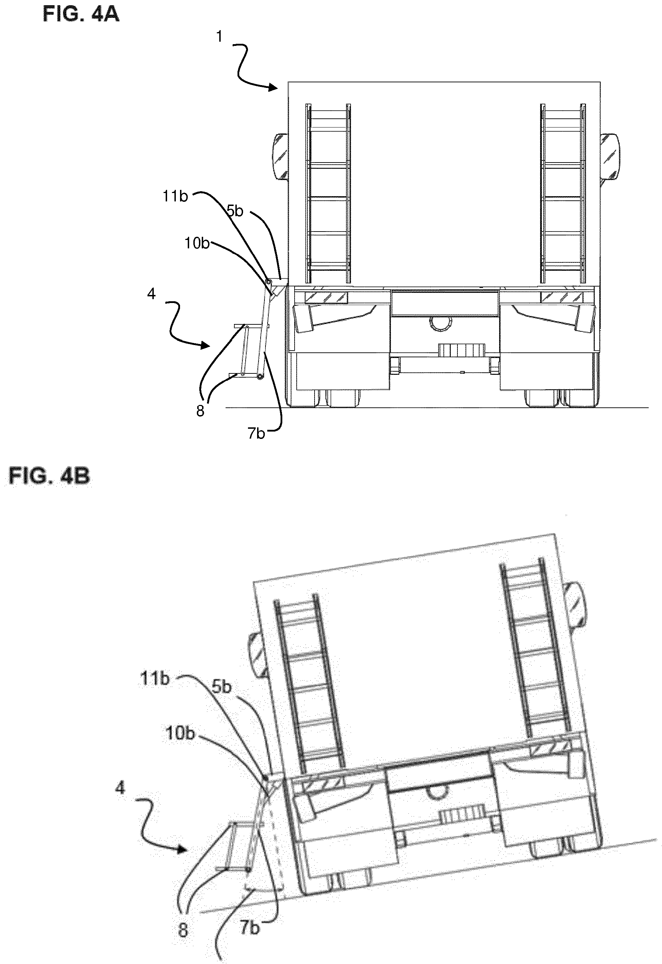

Assuming the operative condition depicted in figure 4A, the cabin 3 of vehicle 1 is not inclined with respect to its chassis (x direction), the lateral supports 7a, 7b lay almost in a vertical direction (y direction), while the at least two steps 8 lay almost in horizontal planes parallel to the ground. In that first position, a driver using the stepladder 4 may easily get on and get off of the cabin 3 of the firefighting vehicle 1. If steps 8 are not useful, they may be rotated to assume their closed position.

The second position of the stepladder 4 may depend on the inclination of of cabin 3 with respect to its chassis or of the rescue vehicle 1 itself.

In particular, angle α (Figure 4B) represents the rotation of the lateral supports 7a, 7b of the stepladder 4 from their first position to their second position. The amplitude of the angle α is a function of the inclination of cabin 3. In other words, in their second position the lateral supports 7a, 7b may assume the almost vertical direction (y direction) as in the first position. In such a way, when getting on or getting off the vehicle, the driver will assume a balanced position with the projection of his center of gravity inside the area of the steps. Therefore, to reach this aim, the lateral supports 7a, 7b should assume an inclination different from the predetermined inclination corresponding to the first position (Figure 4A).

Advantageously, in order to let the steps reach a lying parallel to the cabin's floor, the two steps 8 may be optionally further inclined in active way, by means of second actuator means (not shown). In any case, either operating only first actuator means 10a, 10b or operating both first and second actuator means, the stepladder 4 according to the present invention is configured to allow a driver to get on and get off the firefighting vehicle 1 in a comfortable way, avoiding the risk of falling down.

The vehicle may accordingly comprise at least one sensor (not shown) configured to detect the inclination of the vehicle and a control unit (not shown) comprising elaboration means configured to receive inclination vehicle value from sensors and calculate an optimal inclination of said lateral supports 7a, 7b, and optionally of said steps 8, to facilitate the use of the ladder of the vehicle. The control unit may therefore control automatically stepladder 4 without any intervention of the driver. Preferably, such control unit is the ECU of the vehicle.

The at least one sensor may be an inclinometer able to detect the inclination of the vehicle, i.e. the inclination of the rescue vehicle 1 along the x and/or z axis.

The control unit may actuate first actuator means 10a, 10b to rotate the lateral supports 7a, 7b of a predetermined angle α so that the lateral supports reach the calculated optimal inclination

According to the above described embodiment and its operation, the present invention is moreover directed to a method for operating the above described stepladder 4 on a rescue vehicle, in particular on a firefighting vehicle.

Such method for operating the stepladder 4 essentially comprises the following steps:
- measuring the rescue vehicle 1 inclination by means of at least one sensor;
- calculating the optimal inclination α of the lateral supports 7a, 7b of the stepladder 4 as a function of the inclination of the rescue vehicle 1;
- actively rotating the lateral supports 7a, 7b to reach the calculated optimal inclination α.

Advantageously, in order to maintain the steps 8 of the stepladder 4 in a position which guarantees comfort to the crew, the above method may further comprise the following step:
- inclining the at least two steps 8 of the stepladder 4 so that they are parallel to ground.

Preferably, the above method may be carried out by the control unit of the vehicle. To perform such a method a suitable algorithm based on a closed loop control may be run by the elaboration means of the control unit.

In view of the foregoing, the advantages of a stepladder 4 according to the invention are apparent.

First, the orientation of the lateral support 7a, 7b of the stepladder 4 is essential for allowing the easy and quick get on and get off of the crew from the rescue vehicle 1.

The proposed stepladder is economic and may be easily implemented on existing vehicles.

Moreover, the method for operating the stepladder 4 is simply and versatile and may be applied to different ground inclinations and conditions.

Furthermore, the lateral supports 7a, 7b may be inclined so that they can reach a maximum opened value thereby allowing an easy access under cabin 3 for maintenance reasons.

It is clear that modifications can be made to the described stepladder 4 which do not extend beyond the scope of protection defined by the claims.

For example, shapes of stepladder 4 may be varied without departing from their functionalities. Therefore, stepladder 4 may comprise more steps 8 being of different typologies than the above described.

Further, first actuators 10a, 10b and second actuator means may be substituted by any equivalent, e.g. pneumatic, hydraulic or electric actuators.

## Claims

1. Vehicle comprising a chassis (2), a cabin (3) carried by said chassis (2) and a stepladder (4) , said stepladder (4) comprising two forks (5a,5b), a first lateral support (7a) carried in a movable manner by said first fork (5a) and a second lateral support (7b) carried in a movable manner by said second fork (5b), and at least a step (8) carried by said first and second lateral supports (7a, 7b),
said stepladder (4) being configured to be coupled to said cabin (3) by means of said two forks (5a, 5b),
wherein the lateral supports (7a, 7b) being configured to move with respect to said forks (5a, 5b)
**characterized in that** said stepladder (4) comprises first actuator means (10a, 10b) configured to move said lateral supports (7a, 7b) between a first position into which said lateral supports (7a, 7b) are substantially vertical, when rescue vehicle (1) inclination is substantially zero and a second position, inclined with respect to a vertical axis, when the rescue vehicle (1) inclination is different from zero,
said vehicle comprising an electronic unit configured to calculate a rotation angle (α) of lateral supports (7a, 7b) of a stepladder (4) with respect to said lateral axis as a function of said inclination of the rescue vehicle (1)

2. Vehicle according to claim 1, wherein said first and second lateral supports (7a, 7b) are carried pivotally to the respective fork (5a, 5b) by means of a relative pivot (11a, 11b), said first actuator means (10a, 10b) being respectively hinged to the first and second fork (5a, 5b) and to the first and second lateral support (7a, 7b).

3. Vehicle according to any of the preceding claims, wherein the at least one step (8) is carried in a movable manner by said lateral supports (7a, 7b).

4. Vehicle according to any of the preceding claims, wherein the at least one step (8) is pivotally connected to said lateral supports (7a, 7b), by means of respective first and second beam (9a, 9b).

5. Vehicle according to any of the preceding claims, further comprising second actuator means configured to actively vary the inclination of said at least one step (8) with respect to said lateral supports (7a, 7b).

6. Vehicle according to any of the preceding claims, wherein said actuator means are mechanically controlled.

7. Method for operating a stepladder (4) in a vehicle according to any of the preceding claims comprising the following steps:
• measuring a rescue vehicle (1) inclination by means of at least one sensor;
• calculating an optimized inclination of lateral supports (7a, 7b) of a stepladder (4) as a function of said inclination of the rescue vehicle (1);
• rotating the lateral supports (7a, 7b) of a predetermined angle (α) so that the lateral supports reach the calculated optimized inclination.
• inclining said at least one step (8) of the stepladder (4) so that said at least one step (8) reach an optimized inclination with respect to said lateral supports (7a, 7b) as a function of said inclination of said rescue vehicle.

## Patentansprüche

1. Fahrzeug, umfassend ein Fahrgestell (2), eine Kabine (3), die von dem Fahrgestell (2) getragen wird, und eine Trittleiter (4), welche Trittleiter (4) zwei Ausleger (5a, 5b) umfasst, eine erste seitliche Stütze (7a), die beweglich von dem ersten Ausleger (5a) getragen wird, und eine zweite seitliche Stütze (7b), die beweglich von dem zweiten Ausleger (5b) getragen wird, und zumindest eine Stufe (8), die von den ersten und zweiten seitlichen Stützen (7a, 7b) getragen wird,
welche Trittleiter (4) dazu ausgebildet ist, mit der Kabine (3) durch die zwei Ausleger (5a, 5b) gekoppelt zu werden,
wobei die seitlichen Stützen (7a, 7b) dazu ausgebildet sind, sich bezüglich der Ausleger (5a, 5b) zu bewegen,
**dadurch gekennzeichnet, dass** die Trittleiter (4) erste Betätigungsmittel (10a, 10b) umfasst, dazu ausgebildet, die seitlichen Stützen (7a, 7b) zwischen einer ersten Position, in der die seitlichen Stützen (7a, 7b) im Wesentlichen senkrecht stehen, wenn die Neigung des Rettungsfahrzeugs (1) im Wesentlichen gleich Null ist, und einer zweiten Position zu bewegen, die in Bezug auf eine vertikale Achse geneigt ist, wenn die Neigung des Rettungsfahrzeugs (1) ungleich Null ist,
wobei das Fahrzeug eine elektronische Einheit umfasst, ausgebildet zur Berechnung eines Drehwinkels (α) der seitlichen Stützen (7a, 7b) einer Trittleiter (4) in Bezug auf die seitliche Achse als eine Funktion der Neigung des Rettungsfahrzeugs (1).

2. Fahrzeug gemäß Anspruch 1, bei welchem die ersten und zweiten seitlichen Stützen (7a, 7b) schwenkbar in Bezug auf den jeweiligen Ausleger (5a, 5b) mittels einer relativen Drehachse (11a, 11b) getragen werden, wobei die ersten Betätigungsmittel (10a, 10b) jeweils schwenkbar an den ersten und zweiten Ausleger (5a, 5b) und an die erste und zweite seitliche Stütze (7a, 7b) angelenkt sind.

3. Fahrzeug gemäß einem der vorhergehenden Ansprüche, bei welchem die zumindest eine Stufe (8) beweglich durch die seitlichen Stützen (7a, 7b) getragen wird.

4. Fahrzeug gemäß einem der vorhergehenden Ansprüche, bei welchem die zumindest eine Stufe (8) schwenkbar mit den seitlichen Stützen (7a, 7b) mittels eines jeweiligen ersten und zweiten Trägers (9a, 9b) verbunden ist.

5. Fahrzeug gemäß einem der vorhergehenden Ansprüche, ferner umfassend zweite Betätigungsmittel, dazu ausgebildet, aktiv die Neigung der zumindest einen Stufe (8) in Bezug auf die seitlichen Stützen (7a, 7b) zu verändern.

6. Fahrzeug gemäß einem der vorhergehenden Ansprüche, bei welchem die Betätigungsmittel mechanisch gesteuert werden.

7. Verfahren zum Betrieb einer Trittleiter (4) in einem Fahrzeug gemäß einem der vorhergehenden Ansprüche, umfassend die folgenden Schritte:
- Messung der Neigung eines Rettungsfahrzeugs (1) mittels zumindest eines Sensors;
- Berechnung einer optimierten Neigung der seitlichen Stützen (7a, 7b) einer Trittleiter (4) als eine Funktion der Neigung des Rettungsfahrzeugs (1);
- Drehen der seitlichen Stützen (7a, 7b) um einen vorbestimmten Winkel (α), derart, dass die seitlichen Stützen die berechnete optimierte Neigung erreichen,
- Neigen der zumindest einen Stufe (8) der Trittleiter (4), derart, dass die zumindest eine Stufe (8) eine optimierte Neigung in Bezug auf die seitlichen Stützen (7a, 7b) als eine Funktion der Neigung des Rettungsfahrzeugs erreicht.

## Revendications

1. Véhicule comprenant un châssis (2), une cabine (3) portée par ledit châssis (2) et un escabeau (4), ledit escabeau (4) comprenant deux fourches (5a, 5b), un premier support latéral (7a) porté de manière à pouvoir être déplacé par ladite première fourche (5a) et un second support latéral (7b) porté de manière à pouvoir être déplacé par ladite seconde fourche (5b), et au moins une marche (8) portée par lesdits premier et second supports latéraux (7a, 7b),
ledit escabeau (4) étant configuré pour être couplé à ladite cabine (3) au moyen des deux fourches (5a, 5b),
dans lequel les supports latéraux (7a, 7b) sont configurés pour se déplacer par rapport auxdites fourches (5a, 5b)
**caractérisé en ce que** ledit escabeau (4) comprend des premiers moyens actionneurs (10a, 10b) configurés pour déplacer lesdits supports latéraux (7a, 7b) entre une première position dans laquelle lesdits supports latéraux (7a, 7b) sont sensiblement verticaux, lorsque l'inclinaison du véhicule de sauvetage (1) est sensiblement nulle et une seconde position, inclinée par rapport à un axe vertical, lorsque l'inclinaison du véhicule de sauvetage (1) est différente de zéro,
ledit véhicule comprenant une unité électronique configurée pour calculer un angle de rotation (a) des supports latéraux (7a, 7b) d'un escabeau (4) par rapport audit axe latéral en fonction de ladite inclinaison du véhicule de sauvetage (1)

2. Véhicule selon la revendication 1, dans lequel lesdits premier et second supports latéraux (7a, 7b) sont portés de manière à pouvoir pivoter à la fourche respective (5a, 5b) au moyen d'un pivot relatif (11a, 11b), lesdits premiers moyens actionneurs (10a, 10b) étant respectivement articulés à la première et à la seconde fourche (5a, 5b) et au premier et au second support latéral (7a, 7b).

3. Véhicule selon l'une quelconque des revendications précédentes, dans lequel l'au moins une marche (8) est portée de manière à pouvoir être déplacée par lesdits supports latéraux (7a, 7b).

4. Véhicule selon l'une des revendications précédentes, dans lequel l'au moins une marche (8) est reliée de manière à pouvoir pivoter aux supports latéraux (7a, 7b), au moyen d'une première et d'une deuxième poutre (9a, 9b).

5. Véhicule selon l'une quelconque des revendications précédentes, comprenant en outre des seconds moyens actionneurs configurés pour faire varier activement l'inclinaison de ladite au moins une marche (8) par rapport auxdits supports latéraux (7a, 7b).

6. Véhicule selon l'une des revendications précédentes, dans lequel les moyens actionneurs sont commandés mécaniquement.

7. Procédé pour faire fonctionner un escabeau (4) dans un véhicule selon l'une quelconque des revendications précédentes, comprenant les étapes suivantes :
- mesurer l'inclinaison d'un véhicule de sauvetage (1) au moyen d'au moins un capteur ;
- calculer une inclinaison optimisée des supports latéraux (7a, 7b) d'un escabeau (4) en fonction de l'inclinaison du véhicule de sauvetage (1) ;
- faire tourner les supports latéraux (7a, 7b) d'un angle prédéterminé (a) de manière à ce que les supports latéraux atteignent l'inclinaison optimisée calculée.
- incliner ladite au moins une marche (8) de l'escabeau (4) de sorte que ladite au moins une marche (8) atteigne une inclinaison optimisée par rapport auxdits supports latéraux (7a, 7b) en fonction de ladite inclinaison dudit véhicule de sauvetage.
